# EUROPEAN PATENT SPECIFICATION

(11) **EP 2 414 604 B1**
(45) Date of publication and mention of the grant of the patent: **10.09.2014**
(21) Application number: 10712142.8
(22) Date of filing: 30.03.2010
(51) Int. Cl.: E04G 21/10, E04G 21/18

(54) **BUILDING CONSTRUCTION METHOD**
BAUVERFAHREN
PROCEDE DE CONSTRUCTION POUR BÂTIMENT

(30) Priority: 30.03.2009 GB 0905435
(43) Date of publication of application: 08.02.2012
(73) Proprietor: Deer Park Engineering Limited, Harrow, Middlesex HA1 4LZ (GB)
(72) Inventor: REVILLE, James, Middlesex HA1 4LZ (GB)
(74) Representative: Garratt, Peter Douglas
(86) International application number: PCT/GB2010/050547
(87) International publication number: WO 2010/112919

(56) References cited:
- EP-A2- 0 809 166
- DE-U1- 20 008 963
- FR-A- 1 452 639
- US-A- 2 224 273

## Description

This invention relates to the building construction industry and is concerned with a method for use in the construction of a building, such as a multi-storey building.

In the erection of a multi-storey building, it is usually necessary for each floor as it is being constructed to be "set out", i.e. the setting out engineer in charge of the building project has to ensure that the building is positioned correctly according to the drawings and that all structural components are built to the correct level. For this purpose it is conventional to use a surveying instrument or instruments, such as a laser level measurement instrument or an electronic distance measurement device (EDM), mounted on a tripod. Such tripods are generally large and of course require a stable platform. Typically, the tripod will be positioned on top of the lift core walls or stair core walls of each floor of the building under construction.

However, in cases where the core walls are being built and advanced one floor higher than the floor under construction, it is normally necessary to adopt an alternative method of forming a stable platform for a tripod. Typically, this involves forming a concrete pad; placing the pad on to decking, e.g. plywood decking; positioning a tripod on the concrete pad and mounting a required instrument on the tripod.

This alternative procedure has several disadvantages associated with it. Even with a substantial concrete pad (typical dimensions would be two metre square and 200mm deep) there may remain a considerable amount of movement in the concrete pad due to vibration and movement in the building. Furthermore it is necessary to employ a crane to lift the pad to where it is required, i.e. to different positions within one floor or from one floor to the next as the building grows higher. This results in down-time for the engineer and a loss of crane-usage time.

It is an object of the present invention to provide a method and device for setting out a building which will mitigate the problems encountered with the conventional methods as described above.

Thus, in accordance with the present invention, there is provided a method of setting out a floor of a building under construction, there being a substantially vertical cast in sleeve in the upper end portion of a column formed as a permanent part of the building; the method comprising removably inserting into said sleeve an instrument support device comprising a vertically-extending support member having a structure capable of supporting an instrument; and positioning on said structure an instrument useful in setting out a floor.

The support member may have a tapered end for self tightening engagement under gravity with the sleeve, and said structure may comprise a substantially horizontal platform.

The support member may comprise a tube having a flat metal plate fixed on to one end of the tube, on which plate in use a setting up instrument can be positioned.

Conveniently, certain existing systems employed in the construction of buildings employ a vertical cast in sleeve in the upper end portion of a concrete column formed as part of the building. In one example, the cast in sleeve is used to mount a safety system for use by workers in the construction of decking. The vertically-extending support member of the present invention may therefore be inserted within a pre-existing sleeve which has served its originally intended purpose. Of course, the present invention also contemplates the use of a cast in sleeve exclusively or additionally configured for use in the invention.

The support member is advantageously a cylindrical tube, such as a mild steel cylinder, and may be from 1 to 2 meters long. The lower end portion of the tube may be tapered to assist in its insertion into the cast in sleeve. Advantageously the support member may be provided with means such as a pair of oppositely-disposed handles to assist in the installation and removal of the device form the cast in sleeve. The handles may take the form of cross bars or semicircular handles.

A metal plate may be attached to one end of the tube to support a setting up or surveying instrument. It is preferably provided with means such as a screw thread by which the instrument can be secured.

For a better understanding of the invention and to show how the same may be carried into effect, reference will now be made, by way of example, to the accompanying drawings, in which:
Figure 1 schematically illustrates a prior art method;
Figure 2 schematically illustrates a method according to the invention;
Figure 3 illustrates a cast in sleeve; and
Figure 4 shows a device according to the invention.

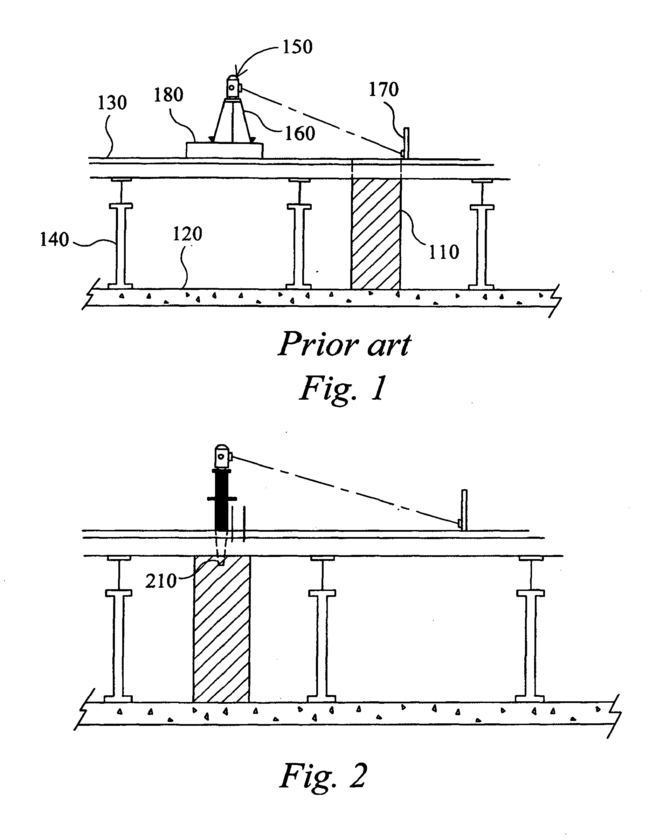

Referring initially to Figure 1, a typical multi-storey building construction comprises an appropriate array of concrete columns (such as column 110 in the figure) and a concrete slab 120 for each storey. For the construction of the next storey, decking 130 is mounted on adjustable decking supports 140.

The setting up procedure which is referred to above is illustrated schematically in this drawing through a surveying or setting up instrument 150, mounted on a tripod 160 and interacting with a marker or reflective device 170. To provide a reasonably stable base for the tripod 160, a concrete slab 180 is placed upon the decking 130.

The disadvantages associated with this concrete slab have been explained above.

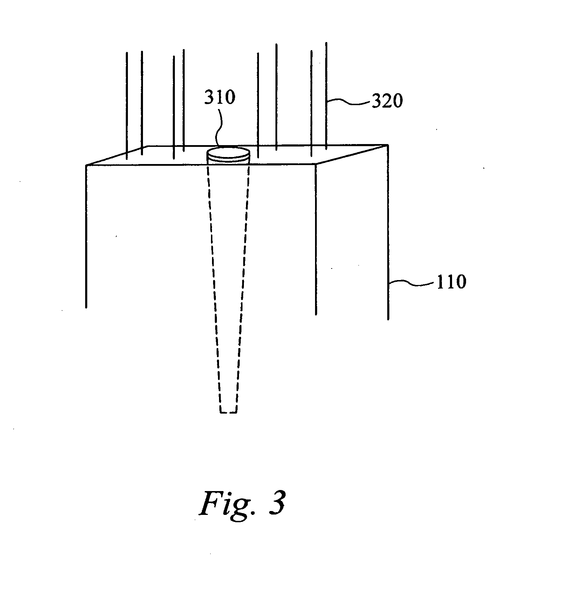

To enable the use of known safety systems in the construction of decking and other related tasks, it has become common to form a cast-in sleeve in the upper portion of a concrete column. This is shown to a large scale in Figure 3 where a cast-in sleeve 310 is positioned in the upper portion of the concrete column 110. Also shown in this drawing are the conventional starter bars 320 which form part of the construction of the next upwardly extending portion of the concrete column.

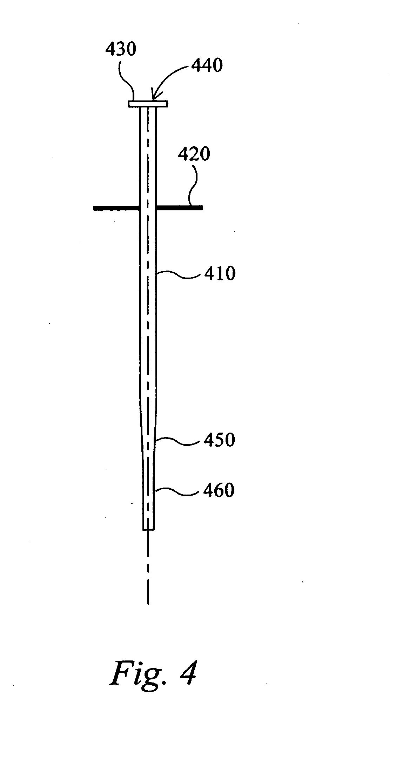

An instrument supporting device according to one aspect of this invention is shown in Figure 4 and comprises a tubular member 410 having a cross-bar 420 and an instrument platform 430 with a central threaded bar 440. At the opposite end, the support member 410 is tapered over region 450 to an end portion 460 of reduced diameter.

In use, the supporting device is engaged as shown in Figure 2 with the cast-in sleeve 310. The shape and the configuration of the regions 450 and 460 of the support are selected so as to provide for ready engagement and then stable connection with the internal dimensions of the cast-in sleeve. In this simple and rapid manner, a platform is provided for the instrument 150 which, because of the direct engagement with the concrete column, provides for a mounting of the instrument which is more stable than in the prior art arrangements and which is as simple if not simpler to use in setting out as a tripod mounting. Costs and time delays in constructing and delivering by crane to each storey of the concrete pad are avoided.

It should be understood that this invention has been described by way of example only and that a wide variety of modifications are possible without departing from the scope of the appended claims. Whilst a tubular construction of steel is robust and inexpensive, other forms and materials can be employed. A plate forms a convenient means of supporting a variety of instruments, but other structures - perhaps customized for specific instruments - could also be employed. Handles in a variety of forms are useful in transporting and manoeuvring the device, but will not always be necessary.

## Claims

1. A method of setting out a floor of a building under construction, there being a substantially vertical cast in sleeve in the upper end portion of a column formed as a permanent part of the building; the method comprising removably inserting into said sleeve an instrument support device comprising a vertically-extending support member having a structure capable of supporting an instrument; and positioning on said structure an instrument useful in setting out a floor.

2. A method according to Claim 1, comprising the step of forming said substantially vertical cast in sleeve in the upper end portion of a column formed as a permanent part of the building.

3. A method according to Claim 1 or Claim 2, wherein the support member has a tapered end for self tightening engagement under gravity with the sleeve.

4. A method according to any one of Claims 1 to 3, wherein said structure comprises a substantially horizontal platform.

5. A method according to any one of the preceding claims in which said support member comprises a tube having a flat metal plate fixed on to one end of the tube, on which plate in use a setting up instrument can be positioned.

6. A method according to Claim 5, wherein the support member is a cylindrical tube, such as a mild steel cylinder, from 1 to 2 meters long.

7. A method according to Claim 6, wherein the tube is tapered to assist in its insertion into the case in sleeve.

8. A method according to any one of Claims 5 to 7, wherein the support member is provided with a pair of oppositely-disposed handles to assist in the installation and removal of the device from the cast in sleeve.

## Patentansprüche

1. Verfahren zum Vermessen eines Etagenbodens eines im Bau befindlichen Gebäudes, wobei eine im Wesentlichen vertikale Eingusshülse im oberen Endabschnitt eines Pfeilers vorhanden ist, der als permanenter Teil des Gebäudes gebildet ist; wobei das Verfahren Folgendes umfasst: entfernbares Einsetzen einer Instrumententrägervorrichtung in die genannte Hülse, die ein sich vertikal erstreckendes Trägerelement umfasst, das eine Struktur aufweist, die ein Instrument tragen kann; und Positionieren eines Instruments auf der genannten Struktur, das bei Vermessung eines Etagenbodens von Nutzen ist.

2. Verfahren nach Anspruch 1, das den Schritt des Bildens der genannten im Wesentlichen vertikalen Eingusshülse im oberen Endabschnitt eines Pfeilers umfasst, der als permanenter Teil des Gebäudes gebildet ist.

3. Verfahren nach Anspruch 1 oder Anspruch 2, wobei das Trägerelement ein sich verjüngendes Ende für den Selbstspanneingriff mit der Hülse unter der Schwerkraft umfasst.

4. Verfahren nach einem der Ansprüche 1 bis 3, wobei die genannte Struktur eine im Wesentlichen horizontale Plattform umfasst.

5. Verfahren nach einem der vorhergehenden Ansprüche, wobei das genannte Trägerelement ein Rohr umfasst, an dessen einem Ende eine flache Metallplatte befestigt ist, an der bei Gebrauch ein Vermessungsinstrument angebracht werden kann.

6. Verfahren nach Anspruch 5, wobei das Trägerelement ein zylindrisches Rohr, wie z. B. ein Baustahlzylinder, mit einer Länge von 1 bis 2 Metern ist.

7. Verfahren nach Anspruch 6, wobei das Rohr verjüngt ist, um das Einsetzen in die Eingusshülse zu unterstützen.

8. Verfahren nach einem der Ansprüche 5 bis 7, wobei das Trägerelement mit einem Paar von entgegengesetzt angeordneten Handgriffen versehen ist, um die Installation und die Entfernung der Vorrichtung in die bzw. aus der Eingusshülse zu unterstützen.

## Revendications

1. Procédé pour l'implantation d'un sol d'un bâtiment en construction, un manchon encastré par moulage sensiblement vertical étant prévu dans la portion d'extrémité supérieure d'une colonne formée à titre de partie permanente du bâtiment ; le procédé comprenant les opérations consistant à insérer de façon amovible, dans ledit manchon, un dispositif de support d'instrument comportant un élément de support se prolongeant dans le plan vertical doté d'une structure apte à soutenir un instrument ; et à positionner, sur ladite structure, un instrument qui est utile pour l'implantation d'un sol.

2. Procédé selon la revendication 1, comprenant l'étape consistant à former ledit manchon encastré par moulage sensiblement vertical dans la portion d'extrémité supérieure d'une colonne formée à titre de partie permanente du bâtiment.

3. Procédé selon la revendication 1 ou la revendication 2, l'élément de support possédant une extrémité évasée en vue d'une solidarisation par auto-serrage avec le manchon sous l'effet de la gravité.

4. Procédé selon l'une quelconque des revendications 1 à 3, ladite structure comprenant une plate-forme sensiblement horizontale.

5. Procédé selon l'une quelconque des revendications précédentes, dans lequel ledit élément de support comporte un tube avec une plaque métallique plane laquelle est fixée sur une extrémité du tube, plaque sur laquelle, lors de son utilisation, un instrument de mise en place peut être positionné.

6. Procédé selon la revendication 5, l'élément de support étant un tube cylindrique, tel un cylindre en acier doux, d'une longueur de 1 à 2 mètres.

7. Procédé selon la revendication 6, le tube étant évasé afin de faciliter son insertion dans le manchon encastré par moulage.

8. Procédé selon l'une quelconque des revendications 5 à 7, l'élément de support étant pourvu d'une paire de poignées disposées de façon opposée afin de faciliter l'installation et la dépose du dispositif au niveau du manchon encastré par moulage.
